# EUROPEAN PATENT SPECIFICATION

(11) **EP 0 940 610 B1**
(45) Date of publication and mention of the grant of the patent: **30.11.2005**
(21) Application number: 99104486.8
(22) Date of filing: 05.03.1999
(51) Int. Cl.: F16J 15/32

(54) **An annular sealing assembly, in particular, for a wheel hub**
Ringdichtungsanordnung, insbesondere für eine Radnabe
Dispositif d'étanchéité annulaire, en particulier pour un moyeu de roue

(30) Priority: 06.03.1998 IT TO980190
(43) Date of publication of application: 08.09.1999
(73) Proprietor: RFT S.p.A., 10121 Torino (IT)
(72) Inventor: Chiovato, Piero, 10025 Pino Torinese (IT)
(74) Representative: Cerbaro, Elena

(56) References cited:
- EP-A- 0 750 142
- US-A- 3 929 340
- US-A- 5 143 385
- US-A- 5 271 629

## Description

The present invention relates to an annular sealing assembly of the type intended to protect the bearings in a wheel hub from external contaminants such as water, dust and mud, with which the wheel hub is constantly in contact during its working life.

In the motor vehicles field, it is known that the bearings, in particular, those in the wheel hubs, are continuously exposed in use to high levels of contaminants: for this reason, in such applications, the sealing assemblies used to protect the bearings (incorporated in the bearing themselves or, more frequently, forming part of the wheel-hub unit) not only have the function of retaining the lubricating oil and grease within the bearing but, in particular, act to prevent external contaminants entering the wheel hub and/or the bearing.

Unfortunately, contaminants such as dust and mud, although excluded by the sealing assembly, tend to stick in the grease which lubricates the sealing lips and wear out the lips by friction until they lose all their sealing capacity. In order to overcome this disadvantage, the known sealing assemblies for the uses described have a main sealing lip and, outside this, an anti-dust lip, the purpose of which is to protect the main lip from coming into contact with the contaminants.

However, in order to avoid them wearing out rapidly, the anti-dust lips are usually designed so that they contact the sealing surface with which the main lip cooperates with interference, with very low interference or, in other words, with some play. In this way, however, any lubricating grease between the two lips is easily lost to the outside and external contaminants, even if present in minimal quantities, can therefore come into contact with the main sealing lip, consequently wearing it out. US-A-5143385 shows a shaft seal which cannot overcome the drawbacks of the prior art as described above.

The object of the present invention is to provide a sealing assembly for use under severe conditions, for example, for wheel hubs of motor vehicles, which ensures a long life span of the main sealing lip, even in the presence of high levels of external contaminants while, at the same time, maintaining a simple and compact structure which is inexpensive to manufacture.

According to the invention there is therefore provided a sealing assembly as described in Claim 1.

The sealing assembly comprises a mounting portion which can be fitted coaxially between the said elements and mounted so as to be fixed against rotations with respect to a first thereof; and at least first and second coaxial annular lips which slidingly cooperate with a sealing surface of a second of the said elements; the first lip being immediately opposite the said space in order to protect it from the external environment, and being shaped as a sealing lip which cooperates with the said sealing surface with a predetermined pressure and interference; and the second lip being exposed to the said external environment on its side facing away from the first lip and being formed as an anti-dust lip; wherein the said second lip has an undulating sealing edge which cooperates with interference with the said sealing surface. In particular, the sealing edge is defined by at least one undulating circumferential line forming, in the axial sense, peaks and troughs, and the second lip is generally formed such that the tracks of its rigid radial profile at a said trough and the peak immediately adjacent thereto intersect substantially at the said sealing surface, that is, they intersect at a distance from the rigid inner diameter of the lip that is equal to the interference envisaged, in use, between the lip and the sealing surface.

Preferably, the undulating shape of the aforesaid line includes from two to eight waves, in other words, from two to eight peaks and troughs.

In this way, the external contaminants intercepted by the anti-dust lip are not merely stopped, with the consequent possibility of the lip rapidly wearing out, but are "pumped" back into the external environment from where they came by means of a pumping effect exerted on the lip having the corrugated sealing edge by the relative rotation between this and the sealing surface on which, according to the invention, the anti-dust lip slides with limited interference.

This "pumping" effect, obtained by shaping a sealing lip in the appropriate manner, is known in the prior art, but was developed (and has until now been used) specifically to assist the lubrication of sealing lips in "clean" environments, and for high speed applications.

However, according to the invention it is now applied to a completely different field (a "dirty" environment and at a relatively low speed), on a different lip (an anti-dust lip), and modifying the lip itself so as to make it engageable with interference (albeit low) with the sealing surface; but, above all, the known effect is used to achieve a completely different purpose (to "pump" contaminants and detritus rather than oil) with a completely surprising and unexpected positive result which could not have been deduced previously.

Further characteristics and advantages of the present invention will become clear from the following description of a non-limitative embodiment, given with reference to the accompanying drawings, in which:
Figure 1 is a view from above, in longitudinal radial section, of a sealing assembly according to the invention; and
Figure 2 shows a constructional and functional detail of the sealing assembly of Figure 1.

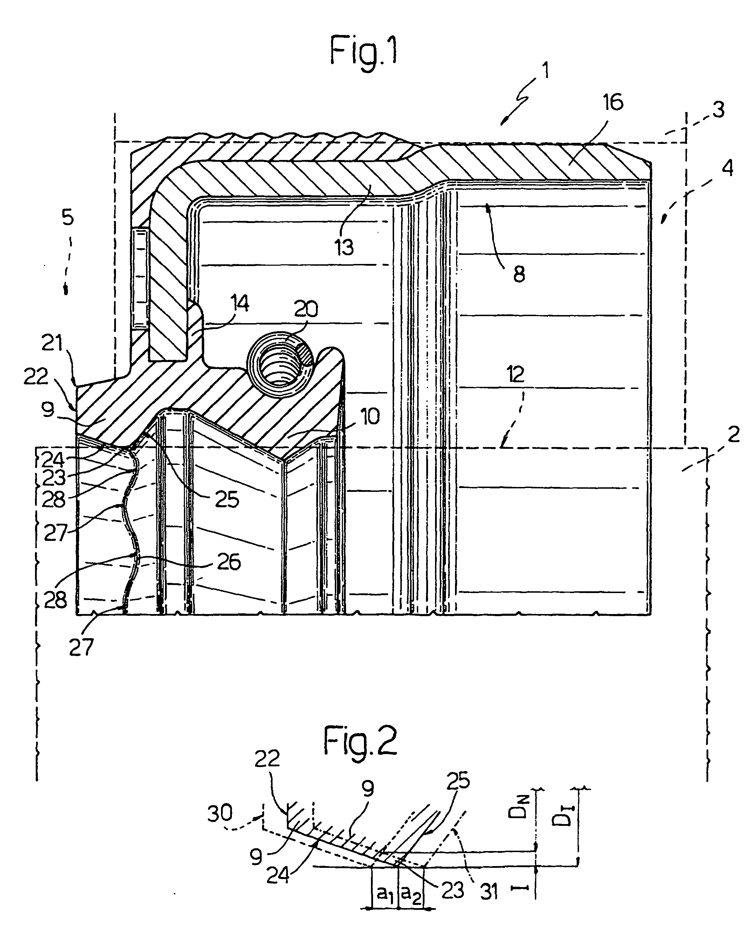

With reference to Figures 1 and 2, the reference numeral 1 indicates a sealing assembly of substantially known general structure, which can be fitted between two relatively rotatable elements 2, 3 (represented only schematically and in broken outline in Figure 1, for example, the inner and outer rings of a bearing, or a shaft and a support therefor) in order to provide a fluid-tight seal for a space 4 defined between the elements 2, 3 against the environment outside the space 4, generally indicated 5.

The sealing assembly 1 includes a mounting portion 8 which can be fitted between the elements 2, 3, and connected to one of the elements so as to be fixed against rotation with respect thereto, in this particular example, the element 3, and at least two coaxial annular lips 9, 10 which slidingly cooperate with a sealing surface 12 of the other element, in this particular example, the radially innermost element 2.

The mounting portion 8 has a substantially rigid reinforcing portion 13 formed, for example, from plastics material or, preferably, from a coined metal (for example, zinc-coated iron or brass), and an elastomeric portion 14 from which integral lips 9 and 10 extend axially to opposite sides, which lips are formed from the same elastomeric material as the portion 14 which preferably, and in a known arrangement, also extends to cover in part a sleeve-shape portion 16 of the reinforcement 13 in order to form a static seal between the portion 8 and the element 3.

The lip 10 is located immediately opposite the space 4 in order to protect it against the external environment 5, and is shaped like a conventional sealing lip: however, the lip 10 is substantially V-shape in radial section with the vertex facing the axis of symmetry of the lips 9, 10, not shown for simplicity (Figure 1) and, preferably, carries radially and on the outside, a radially-locking toroidal spring 20 on the side opposite the surface 12, mounted in known way.

In this way, the lip 10, held by the spring 20, cooperates with the sealing surface 12 with a predetermined contact pressure and interference.

On the other hand, according to the invention, the lip 9 is positioned and formed, apart from the variants that will be described, substantially as a known anti-dust lip; therefore, the lips 9, 10 extend axially from opposite sides of the portion 14 such that the lip 9 is exposed to the external environment 5 on its side 21 facing away from the lip 10. This side is delimited towards the axis of symmetry of the lip 9, not shown, by a front surface 22 disposed substantially perpendicular to the aforesaid axis of symmetry, as is common in anti-dust lips.

According to the invention, the lip 9 is thus provided with a sealing edge 23 cooperating with interference with the sealing surface 12, and is substantially undulating or corrugated. In particular, the sealing edge 23 is shaped like that of a sealing lip, being delimited between oblique opposite annular sides 24, 25 of the same lip 9, and is defined, in the non-limitative example illustrated, by wave an undulating circumferential line 26 forming, in the axial sense, a plurality of peaks 27 and corresponding troughs 28.

According to the invention, the sides 24, 25 are both inclined at an acute angle and in opposite directions with respect to the aforesaid axis of symmetry of the annular lips 9, 10 and, in particular, at angles of different values. In one aspect of the invention, the side 24, which does not exist in conventional anti-dust lips, obliquely intersects the front surface 22, breaking it up, and consequently faces the external environment 5; in addition, the side 24 is inclined with respect to the axis of symmetry of the lips 9, 10 by an angle less than that of the opposite side 25 and which, in any case, is very small (between 5 and 15 degrees).

According to another aspect of the invention, the circumferential line 26 can comprise from two to eight waves, that is, from two to eight respective peaks 27 and troughs 28, depending on how it is shaped, that is, depending on the separation between two adjacent peaks 25 (or between two adjacent troughs 28). In any case, however, the axial size of the waves, that is, the magnitude of the peaks 27 and troughs 28, is symmetrical and of relatively small value, between 1 and 4 tenths of a millimetre.

With particular reference to Figure 2, due to the presence of the undulating line 26, and the fact that it cooperates interferingly with the surface 12, although with a value lower than the interference between the surface 12 and the lip 10, the lip 9, in use, exhibits a periodic axial motion which causes the sealing edge 26 to move axially with respect to its rest position, illustrated in continuous outline in Figure 2, by axial quantities a1 and a2 which are identical to each other and equal to the value of the aforesaid axial magnitude of the peaks 27 and troughs 28, that is, 1-4 tenths of a millimetre, thus generating a pumping effect which, during the tests conducted by the Applicant, surprisingly showed itself capable of repelling the external contaminants, ensuring reduced wear of the lip 9 which is, in any case, able to extend the life of the sealing lip 10.

Finally, according to a further aspect of the invention, the lip 9 is designed in such a way that the delineation of the radial profile of a peak 27 and the immediately adjacent trough 28, which delineation are illustrated in broken outline in Figure 2 and are indicated respectively 30 and 31, intersect each other, as illustrated in Figure 2, substantially at the surface 12, that is, along a nominal diameter DN of the sealing assembly 1 (equal to the outer diameter of the sealing surface 12 with which the lips 9, 10 cooperate) equal to the value of the inner diameter DI in undeformed conditions of the lip 9, reduced by the value of the interference I between the lip 9 and the surface 12 as calculated during the design phase.

## Claims

1. A sealing assembly (1) which can be fitted between two relatively rotatable elements (2,3) to provide a fluid-tight seal for a space (4) defined between the said elements from the environment (5) outside the space, the sealing assembly comprising: a mounting portion (8) to be fitted coaxially between the said elements (2,3) and fixed against rotation with respect to a first (3) thereof; and at least first and second coaxial annular lips (10, 9) which slidingly cooperate with a sealing surface (12) of a second (2) of the said elements; the first lip (10) immediately facing the said space (4) to delimit this latter towards the said external environment (5), and being shaped as a sealing lip adapted to cooperate with the said sealing surface (12) with a predetermined pressure and interference; and the second lip (9) being exposed to the said external environment (5) on its side (21) facing away from the first lip (10); **characterized in that** the second lip (9) is shaped as an anti-dust lip having an undulating sealing edge (23) cooperating with interference with the said sealing surface (12) and delimited between oblique opposite annular sides (24,25) of said second lip (9); a first one (24) of said oblique opposite annular sides obliquely intersecting a front surface (22) of said second lip (9) disposed substantially perpendicular to an axis of symmetry of said second lip (9) and delimiting said side (21) of the second lip (9) exposed to the said external environment (5).

2. A sealing assembly (1) according to Claim 1, **characterized in that** said oblique opposite annular sides (24,25) of the second lip (9) are inclined at an acute angle and in the opposite direction with respect to the axis of symmetry of the said second lips (9); said sealing edge (23) delimited thereof being defined by at least one undulating circumferential line (26) forming, in the axial sense, peaks (27) and troughs (28).

3. A sealing assembly (1) according to Claim 2, **characterized in that** the said circumferential line (26) comprises from two to eight respective peaks (27) and troughs (28).

4. A sealing assembly(1) according to Claim 2 or Claim 3, **characterized in that** the said sides (24,25) of the second lip (9) are inclined at different angles.

5. A sealing assembly (1) according to Claim 4, **characterized in that** said first oblique annular side (24) of the second lip (9) faces the said external environment (5) and is inclined with respect to the axis of symmetry of the lips (9,10) by a smaller angle than that of the opposite side (25) .

6. A sealing assembly(1) according to any of Claims from 2 to 5, **characterized in that** the said second lip (9) is so shaped that the delineation (30) of its undeformed radial profile at one said trough (28) and the delineation (31) of its undefonned radial profile at the immediately adjacent peak (27) intersect to each other substantially at the said sealing surface (12).

7. A sealing assembly (1) according to any preceding claim, **characterized in that** the said first lip (10) is substantially V-shape in radial section, with the vertex facing the axis of symmetry of the said lips (9,10).

8. A sealing assembly (1) according to any preceding claim, **characterized in that** the said first sealing lip (10) carries a toroidal spring (20), radially and on the outside, on the side opposite from the sealing surface (12).

9. A sealing assembly (1) according to any preceding claim, **characterized in that** the said mounting portion (8) includes a substantially rigid reinforcement (13) formed from plastics material or coined metal, and an elastomeric portion (14) from which the said first and second lips (10,9) extend integrally and axially from opposite sides.

## Patentansprüche

1. Abdichtbaugruppe (1) die zwischen zwei relativ drehbaren Elementen (2,3) gesetzt werden kann, um eine fluiddichte Abdichtung von einem Raum (4), der zwischen den Elementen definiert ist, gegenüber der Umgebung (5) außerhalb des Raumes vorzusehen, wobei die Abdichtbaugruppe folgendes aufweist: einen Montageabschnitt (8), der koaxial zwischen den Elementen (2, 3) gesetzt wird und gegenüber einer Umdrehung in Bezug auf ein erstes (3) von diesen Elementen befestigt ist, und zumindest eine erste und eine zweite koaxiale ringartige Lippe (10, 9), die gleitfähig mit einer Abdichtfläche (12) von einem zweiten (2) der Elemente zusammenwirken; wobei die erste Lippe (10) unmittelbar dem Raum (4) zugewandt ist, um diesen letztgenannten zu der externen Umgebung (5) hin zu begrenzen, und als eine Abdichtlippe geformt ist, die daran angepasst ist, mit der Abdichtfläche (12) mit einem vorbestimmten Druck und Übermaß zusammen zu wirken; und wobei die zweite Lippe (9) gegenüber der externen Umgebung (5) an ihrer Seite (21) gesetzt ist, die von der ersten Lippe (10) weg weist;
**dadurch gekennzeichnet dass**
die zweite Lippe (9) als eine Antistaublippe geformt ist, die eine wellenförmige Abdichtkante (23) hat, die mit einem Übermaß mit der Abdichtfläche (12) zusammenwirkt und zwischen schrägen entgegengesetzten Ringseiten (24, 25) der zweiten Lippe (9) begrenzt ist; wobei eine erste (24) der schrägen entgegengesetzten Ringseiten schräg eine vordere Fläche (27) der zweiten Lippe (9) schneidet, die im Wesentlichen senkrecht gegenüber einer Symmetrieachse der zweiten Lippe (9) angeordnet ist, und die Seite (21) der zweiten Lippe (9) begrenzt, die gegenüber der externen Umgebung (5) freigelegt ist.

2. Abdichtbaugruppe (1) gemäß Anspruch 1,
**dadurch gekennzeichnet dass**
die schrägen entgegengesetzten Ringseiten (24, 25) der zweiten Lippe (9) bei einem spitzen Winkel und in der entgegengesetzten Richtung in Bezug auf die Symmetrieachse der zweiten Lippen (9) geneigt sind, wobei die Abdichtkante (23) von dieser begrenzt ist, wobei sie durch zumindest eine wellenförmige Umfangslinie (26) definiert ist, die in dem axialen Sinne Spitzen (27) und Täler (28) ausbildet.

3. Abdichtbaugruppe) gemäß Anspruch 2,
**dadurch gekennzeichnet dass**
die Umfangslinie (26) von zwei bis acht jeweilige Spitzen (27) und Täler (28) aufweist.

4. Abdichtbaugruppe (1) gemäß Anspruch 2 oder 3,
**dadurch gekennzeichnet dass**
die Seiten (24, 25) von der zweiten Lippe (9) bei unterschiedlichen Winkeln geneigt sind.

5. Abdichtbaugruppe (1) gemäß Anspruch 4,
**dadurch gekennzeichnet dass**,
die erste schräge Ringseite 24) von der zweiten Lippe (9) der externen Umgebung (5) zugewandt ist und in Bezug auf die Symmetrieachse der Lippen (9, 10) um einen kleineren Winkel als die entgegengesetzte Seite (25) geneigt ist.

6. Abdichtbaugruppe (1) gemäß einem der Ansprüche 2 bis 5,
**dadurch gekennzeichnet, dass**
die zweite Lippe (9) so geformt ist, dass die Delineation (30) von ihrem unverformten radialen Profil an einem der Täler (28) und die Delineation (31) von ihrem unverformten radialen Profil bei der unmittelbar benachbarten Spitze (27) einander im Wesentlichen bei der Abdichtfläche (12) schneiden.

7. Abdichtbaugruppe (1) gemäß einem der vorherigen Ansprüche,
**dadurch gekennzeichnet, dass**
die erste Lippe (10) im Wesentlichen eine V-Form in radialen Schnitt hat, wobei der Scheitelpunkt der Symmetrieachse der Lippen (9, 10) zugewandt ist.

8. Abdichtungsbaugruppe (1) gemäß einem der vorherigen Ansprüche,
**dadurch gekennzeichnet, dass**
die erste Abdichtlippe (10) eine Toroidfeder (20) radial und an der Außenseite an der Seite, die von der Abdichtfläche (12) entgegengesetzt ist, trägt.

9. Abdichtbaugruppe (1) gemäß einem der vorherigen Ansprüche,
**dadurch gekennzeichnet, dass**
der Montageabschnitt (8) eine im Wesentlichen steife Verstärkung (13), die aus eine Kunststoffmaterial oder aus einem geprägten Metall ausgebildet ist, und einen elastomerischen Abschnitt (14) hat, von dem die erste und die zweite Lippe (10, 9) sich einstückig und axial von entgegengesetzten Seiten erstrecken.

## Revendications

1. Ensemble d'étanchéité (1) qui peut être adapté entre deux éléments (2, 3) rotatifs l'un par rapport à l'autre afin de fournir un joint d'étanchéité étanche aux fluides pour un espace (4) défini entre lesdits éléments par rapport à l'environnement (5) extérieur à l'espace, l'ensemble d'étanchéité comprenant : une partie de montage (8) qui doit être adaptée de manière coaxiale entre lesdits éléments (2, 3) et fixe pour s'opposer à une rotation par rapport à un premier élément (3) desdits éléments ; et au moins des première et deuxième lèvres annulaires coaxiales (10, 9) qui coopèrent de manière coulissante avec une surface d'étanchéité (12) d'un deuxième élément (2) desdits éléments ; la première lèvre (10) faisant face immédiatement audit espace (4) afin de délimiter ce dernier en direction dudit environnement externe (5), et ayant la forme d'une lèvre d'étanchéité apte à coopérer avec ladite surface d'étanchéité (12) sous une pression et selon une zone de contact prédéterminées ; et la deuxième lèvre (9) étant exposée audit environnement externe (5) sur son côté (21) orienté à distance de la première lèvre (10) ; **caractérisé en ce que** la deuxième lèvre (9) a la forme d'une lèvre anti-poussière présentant un bord d'étanchéité ondulé (23) coopérant sur une zone de contact avec ladite surface d'étanchéité (12) et délimitée entre des côtés annulaires obliques (24, 25) opposés de ladite deuxième lèvre (9) ; un premier côté (24) desdits côtés annulaires obliques opposés croisant de manière oblique une surface avant (22) de ladite deuxième lèvre (9) disposée sensiblement perpendiculairement à un axe de symétrie de ladite deuxième lèvre (9) et délimitant ledit côté (21) de la deuxième lèvre (9) exposée audit environnement externe (5).

2. Ensemble d'étanchéité (1) selon la revendication 1, **caractérisé en ce que** lesdits côtés annulaires obliques (24, 25) opposés de la deuxième lèvre (9) sont inclinés selon un angle aigu et dans la direction opposée par rapport à l'axe de symétrie desdites deuxièmes lèvres (9) ; ledit bord d'étanchéité (23) délimité de celles-ci étant défini par au moins une ligne circonférentielle ondulée (26) formant, dans le sens axial, des pics (27) et des creux (28).

3. Ensemble d'étanchéité (1) selon la revendication 2, **caractérisé en ce que** ladite ligne circonférentielle (26) comprend de deux à huit pics (27) et creux (28) respectifs.

4. Ensemble d'étanchéité (1) selon la revendication 2 ou la revendication 3, **caractérisé en ce que** lesdits côtés (24, 25) de la deuxième lèvre (9) sont inclinés selon des angles différents.

5. Ensemble d'étanchéité (1) selon la revendication 4, **caractérisé en ce que** ledit premier côté annulaire oblique (24) de la deuxième lèvre (9) fait face audit environnement externe (5) et est incliné par rapport à l'axe de symétrie des lèvres (9, 10) selon un angle plus petit que celui relatif au côté (25) opposé.

6. Ensemble d'étanchéité (1) selon l'une quelconque des revendications 2 à 5, **caractérisé en ce que** ladite deuxième lèvre (9) a une forme telle que la délimitation (30) de son profil radial non déformé au niveau d'un desdits creux (28) et la délimitation (31) de son profil radial non déformé au niveau du pic (27) immédiatement adjacent se croisent l'une avec l'autre sensiblement au niveau de ladite surface d'étanchéité (12).

7. Ensemble d'étanchéité (1) selon l'une quelconque des revendications précédentes, **caractérisé en ce que** ladite première lèvre (10) a sensiblement une forme en V dans la section radiale, le sommet faisant face à l'axe de symétrie desdites lèvres (9, 10).

8. Ensemble d'étanchéité (1) selon l'une quelconque des revendications précédentes, **caractérisé en ce que** ladite première lèvre d'étanchéité (10) supporte un ressort toroïdal (20), radialement et à l'extérieur, sur le côté opposé par rapport à la surface d'étanchéité (12).

9. Ensemble d'étanchéité (1) selon l'une quelconque des revendications précédentes, **caractérisé en ce que** ladite partie de montage (8) comprend un renforcement (13) sensiblement rigide constitué de matière plastique ou de métal repoussé, et une partie élastomère (14) à partir de laquelle lesdites première et deuxième lèvres (10, 9) s'étendent de manière solidaire et axiale par rapport aux côtés opposés.
